# EUROPEAN PATENT APPLICATION

(11) **EP 2 272 462 A1**
(43) Date of publication of application: **12.01.2011**
(21) Application number: 09008945.9
(22) Date of filing: 09.07.2009
(51) Int. Cl.: A61C 13/00, A61C 5/00

(54) **Method of producing an individualized tooth veneer and a holder**

(71) Applicant: Nobel Biocare Services AG, 8058 Zürich-Flughafen (CH)
(72) Inventor: Karlsson, Per-Olof, 44165 Alingsås (SE); Nilsson, Urban, 44295 Hålta (SE); Melin, Daniel, 41649 Göteborg (SE)
(74) Representative: Byström, Kurt Linus

(57) **Abstract**

The disclosure concerns a method of producing at least one individualized tooth veneer (7); and a holder (12) for holding the at least one individualized tooth veneer (7), wherein each of the at least one individualized tooth veneer (7) is tailor-made for a predetermined tooth of a person, wherein the method comprises providing computer-readable tooth data which represents a tooth geometry of at least a part of the predetermined tooth; providing, on the basis of the computer-readable tooth data, computer-readable veneer data which represent the geometry of the individualized tooth veneer (7); producing, on the basis of the computer-readable veneer data, the individualized tooth veneer (7); and producing, on the basis of the computer-readable tooth data, an individualized holder for holding the individualized tooth veneer (7). The disclosure further concerns a method of improving the aesthetics of the at least one predetermined tooth.

## Description

### FIELD OF THE INVENTION

The invention is related to a method of producing at least one individualized tooth veneer for a predetermined tooth, and a holder for holding the at least one individualized tooth veneer. Within the dentistry world, veneer is a thin layer of restorative material placed over a tooth surface, to improve the aesthetics of the tooth, for instance for color improvement of a pre-determined tooth. The invention is also related to a method of improving the aesthetics of a predetermined tooth.

### BACKGROUND OF THE INVENTION

US 2007/0298381 A1 describes a dental veneer which is used for temporary attachment to the tooth which may have had other restorative dentistry work, such as permanent veneers or crowns. The temporary veneer is placed on the tooth having an undesirable appearance. The tooth veneer is made from a polymer material which is non-toxic and non-water soluble, and preferably from an ethyl cyanoacetate based polymer. The temporary veneer remains on the tooth of the user for preferably up to seven days, but may be used for less than one day or even less than one hour. The veneer is attached by a non-permanent adhesive type material and can be removed by simply pulling the tooth cover off the individual tooth. Apart from possible restorative dentistry carried out earlier on the respective tooth, the dimensions of the tooth are not altered before applying this polymer tooth veneer.

The manufacturing process of these tooth veneers can be such that the veneers can be tailor-made for each individual tooth. Such a manufacturing process requires a mold which can be produced from an impression of the mouth by methods known in the art. The veneers can be mass-produced according to particular tooth details. The individual veneers can be further shaped and filed, either at the dentist's practice or by the individual at home. The edges and the corners may be filed, sanded or polished to achieve the desired shape suitable for the pre-determined tooth which is to be covered by the veneer.

US 2009/0004629 A1 describes a tooth veneer in the form of a dental arch laminate which can be made of plastic, such as durable, injection-molded plastic, or a veneer formed of plastic. These dental arch laminates are configured for comfortable and reusable application to a person's teeth. The arch laminates are fitted and adhered using a non-toxic tackification adhesive which is not a bonding agent, cement or other semi-permanent adhesive. Rather, the non-toxic tackification adhesive is temporary and reusable. This thin aesthetic arch laminate can be custom-made by taking a mold of a person's teeth and making the thin aesthetic dental arch laminate based on the mold. The mold can be taken in the dental professional's place of business using known dental mold techniques. The person and the dental professional can together choose a color for the thin aesthetic dental arch laminate, with the aim to avoid unpleasant surprises when the thin aesthetic dental arch laminate is received back from the dental laboratory.

Each of the two known veneers discussed above are made of a polymer. This allows the veneer to have a thickness from approx. 0.1 mm and more, up to 0.9 mm.

US 2005/0227204 A1 describes a reusable veneer for temporary use which can be removed by the use of a warm water rinse in the mouth and pulling the veneer off from the teeth. These temporary veneers can be made of porcelain, plastic, other semi-rigid composite materials, or combinations thereof. The veneers can be made from 0.2 mm to about 1 mm in thickness.

These temporary veneers are custom-made by a dentist or can be pre-formed veneers of various sizes, shapes and shades. A custom set of press-on veneers can be made in a simple, non-invasive visit to a dentist. The dentist takes a mold of the teeth, and the lab makes custom-sized and shaped temporary veneers for the person. The veneers then conform to any unusual tooth formation. Alternatively, the mold device can be sent to the relevant person at his or her home and that person can take his or her own impression by biting into the mold and mailing it back to the dentist or directly to a laboratory. Then a set of custom veneers can be mailed back to that person. It is also possible that these veneers are presented in pre-manufactured sets having a large variety of shapes and sizes which are then packed together as a kit with a container of a bonding agent, for retail purchase so that the individual can purchase the package and pick and choose the size, shape and fit needed, to suit their own personal wishes.

None of the above-described veneers require preparation and pre-shaping of the tooth, including cutting, drilling, grinding and other forms of permanently removing material from a tooth. It is generally regarded as advantageous as such irreversible alterations are often a traumatic experience for a person and may require pain-killing shots to be used prior to the procedure. This also enhances costs of the application of a veneer.

Clearly, a minimally invasive, or even non-invasive, application of a veneer has a huge psychological advantage over the application of a veneer which requires permanent removal of tooth material.

Although the temporary veneers can be useful, many people still find the need to apply, remove and re-apply a huge bother, time consuming and they dislike the risk of forgetting to apply and/or to have at hand the necessary materials to apply the veneer. Hence, there is a need for providing a permanent veneer, which is very thin so that it does not require removal of tooth material. Ideally, the veneer can, on the basis of a minimum number of visits to a dentist, be applied to permanently serve its purpose of, for instance, improving the color of the pre-determined tooth. To keep designing costs and manufacturing costs down, there is a need to provide an efficient and reliable method to meet at least one of the above-outlined and other objectives.

Particularly for very thin and fragile individualized tooth veneers it is important to ensure that these are handled with care so that the veneer is not damaged before it is placed onto the predetermined tooth. To keep production costs down, the veneers are ideally produced in large numbers at a central site. However, this requires sending the veneers from that central site to the location where placement onto the teeth will take place, for instance in a local dental practice. This transport entails the risk of damage to the individualized tooth veneers. In a sense, the desire to produce centrally and in an individualized way, and the desire to place locally, are in conflict with each other. There is thus a need for a method that allows for central production at industrial level of individualized tooth veneers which are then locally applied, anywhere in the world, to a person's teeth.

### SUMMARY OF THE INVENTION

The invention provides a method of producing at least one individualized tooth veneer; and a holder for holding the at least one individualized tooth veneer, wherein each of the at least one individualized tooth veneer is tailor-made for a predetermined tooth of a person, wherein the method comprises:
- providing computer-readable tooth data which represents a tooth geometry of at least a part of the predetermined tooth;
- providing, on the basis of the computer-readable tooth data, computer-readable veneer data which represent the geometry of the individualized tooth veneer;
- producing, on the basis of the computer-readable veneer data, the individualized tooth veneer; and
- producing, on the basis of the computer-readable tooth data, an individualized holder for holding the individualized tooth veneer.

Advantageously, the computer-readable tooth data can be used for making both the individualized veneer and the individualized holder. Therefore, the holder can be optimized for holding the veneer in a way that takes into account the particular geometrical aspects of the veneer. It offers the possibility of tailoring the holder to the individual design of the veneer, therewith optimizing the holding of the veneer. This allows for holding a freshly produced thin and fragile individualized tooth veneer in the best possible position immediately after its production. It can be kept in this position during transport and storage up to the moment just before placement onto the tooth for which the veneer is designed. The method further allows for a very attractive way of cost-effectively producing individualized tooth veneers.

As already made clear in the background section, providing computer-readable data representing a tooth geometry of a pre-determined tooth is known. Examples for obtaining such computer-readable data will be given later on. Once the computer-readable veneer data are provided for determining the geometry of the veneer, the actual production of the veneer and the holder can take place on the basis of these teeth data, at a central location where suitable facilities are situated. Computer-readable data can easily be transferred to that central location, for instance, over the internet, keeping physical time needed for transport of such data to a minimum.

At the central location, the individualized tooth veneers and the individualized holders can be produced on an industrial scale using CAM technology and to an extent automatically, i.e. with an investment in machines and equipment rather than in staff. As explained, once both the individualized tooth veneers and the individualized holders are produced, these can be put together in an optimal way and kept inseparable during transport and up to a moment in time just before placement at a local dental practice onto the teeth of a person. The individualized tooth veneers and the individualized holders can be at least partially separated temporarily, such as for further processing, e.g. by a dental technician. The person for whom the veneer is produced only needs to visit the local dental practice twice for initiating and the completion of placement of an individualized tooth veneer against a predetermined tooth. The first visit will be to allow for the production of the computer-readable tooth data. The second visit will be when each of the produced individualized tooth veneers have been received by the local dental practice and can be placed on the teeth of the person.

In an embodiment of a method according to the invention, the individualized tooth veneer is produced in its final shape. This further minimizes the time needed for the second visit of the person to the local dental practice.

In an embodiment of a method according to the invention, the method further comprises producing a first part of the individualized holder, wherein the first part is provided with a shape for fittingly matching a back surface of the individualized tooth veneer. In this way the individualized holder will be provided with a shape that corresponds to the shape of the predetermined tooth for which the individualized tooth veneer is designed. By providing a fitting match between the first part of the holder and the back surface of the veneer, it is possible to hold the veneer "form-fit" against the first part, providing the possibility of offering stability to the positional relationship between the veneer and the first part. Support for the individualized tooth veneer, which may be thin and fragile, is optimal in terms of the geometry. The individualized tooth veneer will not be subjected to undesired stress and strain. If the individualized tooth veneer nevertheless breaks or shows cracks, it is likely that this is due to a processing parameter during the production of the veneer, rather than the presence of a fault in the geometry of the individualized tooth veneer.

In an embodiment of a method according to the invention, the method further comprises producing a second part of the individualized holder for sandwiching the individualized tooth veneer between the first part and the second part, and releasably bonding a front surface of the individualized tooth veneer against the second part. The sandwiching will further add to the stable position of the veneer and reduce the probability that the veneer, for instance, will slide over the first part and/or be subjected to undesired vibrations. By releasably bonding a front surface of the individualized tooth veneer against the second part, a further "anchoring" of the veneer is obtained. It allows for removing the veneer from the first part by simply grasping the second part. The second part may be a transparent part and/or be provided with grasp holders for manually holding the second part during placement of the individualized tooth veneer against the predetermined tooth.

A second transparent part has the advantage that the veneer as well as much of the first part remains visible even without removing the second part. It furthermore will allow for transport of the veneer from the holder to the oral cavity of the relevant person, and even for accurate placement of the veneer onto the predetermined tooth of the person, by manipulating the second part, possibly even without the need of any other tool. This is because the veneer will always be visible when the transparent second part is also used as a transfer tool and placement tool. Furthermore, the direct surrounding of the veneer in the person's oral cavity will then always be visible during placement of the dental product, thus facilitating accurate and swift placement of the veneer. Also, alignment of a particular veneer with the tooth receiving that particular veneer as well as with any additional veneer is provided for.

The grasp holders would have the advantage that no other tool is required for holding the veneer when the veneer is positioned on the predetermined tooth of the relevant person.

In an embodiment of a method according to the invention, the method comprises providing the first and second part such that these are releasably securable to each other when the individualized tooth veneer is sandwiched between the first and second part. The veneer is then encapsulated in an envelope provided by the first and second part in a way that allows for transport of the veneer as kept in the holder.

In an embodiment of a method according to the invention, the method comprises producing the first part such that it exhibits a model of at least a part of the predetermined tooth, wherein the part has a shape that is complementary to a shape of the back surface of the individualized tooth veneer. This would be highly advantageous as it would be easy to make this on the basis of the computer-readable tooth data. Furthermore, in an embodiment wherein the entire set of teeth is part of the model, it will allow for checking whether the predetermined tooth as covered by the individualized tooth veneer also performs a natural match within the set of teeth. This embodiment would further allow for checking, just before placement, whether the right holder and individualized veneer are made available for placement of the veneer onto the predetermined teeth within a set of teeth of a person. A dental practitioner will straightaway notice incompatibility if the model does not correspond to the set of teeth of that person. It will avoid trying to place the veneer onto teeth for which the veneer was not designed. In that sense, it will also avoid unintentionally damaging the veneer by forcing the veneer upon teeth for which the veneer was not designed. Furthermore, it allows for distinguishing between different veneers. For example, it can be difficult to distinguish between two veneers for the front teeth of a single person.

In an embodiment of a method according to the invention, the method comprises providing the second part with a shape for fittingly matching a front surface of the individualized tooth veneer. This will mean that the envelope provided by the first and second parts during sandwiching the veneer, will on both the back surface and the front surface of the veneer optimally fit to the veneer so that the veneer is very stably positioned within the holder. This contributes to safe transport of the veneer from the production site to the relevant local dental practice.

In an embodiment of a method according to the invention, the method comprises providing the second part as a foil. This ensures that the second part will adopt its shape to the veneer, rather than require a deformative response of the veneer on bonding against the second part. The properties of a foil, particularly its sheet-like behavior, flexibility, thickness, and strength in the plane of a sheet, ensure that it is possible to secure the veneer onto the first part without applying any undesired strain to the veneer. Furthermore, a foil is relatively cheap and widely available.

In an embodiment of a method according to the invention, the method comprises providing the foil as made of a plastic, heating the plastic; sandwiching the individualized tooth veneer between the first part and the foil, and vacuum pressing the foil onto the first part. This will be a very practical way of making a tailor-made second part.

In an embodiment of a method according to the invention, the method comprises providing an adhesive to the second part for releasably bonding the front surface of the individualized tooth veneer against the second part. This forms a simple way of ensuring that the front surface of the veneer can be releasably bonded to the second part. It is also a simple way of ensuring that the second part itself can be releasably secured to the first part. Suitable adhesives are widely available. This embodiment may comprise the use of a foil which is in essence a tape.

In an embodiment of a method according to the invention, the method comprises producing a plurality of individualized tooth veneers for a predetermined set of teeth; and producing the second part such that the front surface of each of the plurality of individualized tooth veneers can be releasably bonded against the second part in a fixed positional relationship which corresponds to a positional relationship of the teeth in the predetermined set of teeth for which the veneers are produced.

It often occurs that a person wishes a number of teeth to be provided with a veneer to improve the aesthetics of the teeth which are most often visible to others, for instance when a person smiles. Per veneer applied, it reduces costs and time involved for this way of improving the aesthetics. It is preferred that by one production process and one visit to the local dental practice for the placement, all the veneers are produced and respectively positioned within the person's oral cavity. To avoid mixing up the individualized veneers, straight after the production the veneers can be put and kept in the fixed positional relationship which corresponds to the positional relationship of the teeth for which the veneers are produced.

In an embodiment of a method according to the invention, the method comprises applying a bonding material, such as a colored bonding material to the individualized tooth veneer; and sandwiching the individualized tooth veneer between the first part and the second part. The bonding material can be applied to the back surface of the individualized tooth veneer in the right amount and in the right way, already at the central location straightaway after production of the tooth veneer and the holder. It can, for instance, be carried out such that the dental practitioner at the placement site indeed only needs to press the tooth veneer with the bonding material against the predetermined tooth, and carry out a fixing step, for instance by means of light-hardening, therewith again further reducing the "chair time".

In an embodiment of a method according to the invention, the method further comprises adding a coloring agent to the bonding material or using a pre-colored bonding material. Again, this can be done at the central location so that the need for the involvement of a dental technician who would normally be needed for ensuring that the tooth veneer has the right appearance in terms of color, is not required. This saves time and costs.

The invention is further related to a method of improving the aesthetics of the at least one predetermined tooth. After producing the at least one tooth veneer and a holder comprising a first part and a second part as outlined above, the method further comprises placing the veneer from the first part onto the predetermined tooth. It is preferred that in this method the second part is used as a tool for placing the veneer onto the predetermined tooth.

### BRIEF DESCRIPTION OF THE DRAWING

The invention will further be explained with reference to the drawing, in which:
- Fig. 1:: Shows a model of a set of teeth;
- Fig. 2:: Shows a three-dimensional representation of a predetermined tooth as a result of a method step in an embodiment of a method according to the invention;
- Fig. 3:: Shows a three-dimensional representation of a result of a method step in an embodiment of a method according to the invention;
- Fig. 4:: Shows a support usable in a method step in an embodiment of a method according to the invention;
- Fig. 5:: Shows a result of a method step of an embodiment of a method in accordance with the invention;
- Fig. 6:: Shows results of a method step of an embodiment of a method in accordance with the invention;
- Fig. 7:: Shows schematically an representation of a predetermined tooth provided with a veneer;
- Fig. 8:: Shows an individualized tooth veneer as a result of an embodiment of a method in accordance with the invention;
- Fig. 9:: Shows the individualized tooth veneer as produced in its final shape;
- Fig. 10:: Shows a first part of a holder as a result of an embodiment of a method in accordance with the invention;
- Fig. 11:: Shows (a) a frontal view of the first part shown in Fig. 10 as provided with an individualized tooth veneer, and (b) an individualized tooth veneer;
- Fig. 12:: Shows a holder as a result of an embodiment of a method according to the invention;
- Fig. 13:: Shows a holder as a result of an embodiment of a method according to the invention;
- Fig. 14:: Shows a first part of a holder and a plurality of tooth veneers as a result of an embodiment of a method according to the invention;
- Fig. 15:: Shows a holder as a result of an embodiment of a method according to the invention; and
- Fig. 16:: Shows a second part and an individualized tooth veneer as a result of an embodiment of a method according to the invention.

### DETAILED DESCRIPTION OF EMBODIMENTS

Specific embodiments of the invention will now be described with reference to the accompanying drawing. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawing is not intended to be limiting of the invention. In the drawing, like numbers refer to like elements.

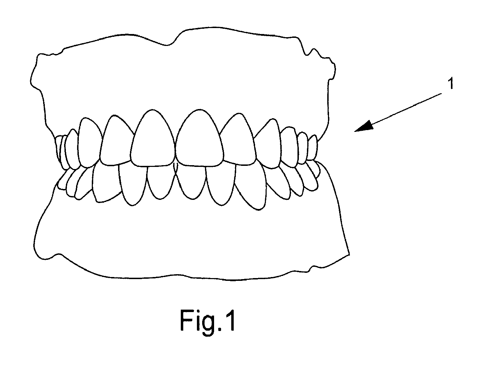

For designing an individualized tooth veneer for a pre-determined tooth, it is necessary to have computer-readable data which represent a tooth geometry of at least a part of the pre-determined tooth for which the tooth veneer is designed. Although this can be obtained by a standard method, using standard systems, well-known in the art and widely available, a very brief description will be given here and a reference is made to WO 2005/046502, which is incorporated herein in its entirety by reference for any purpose, particularly Fig. 1 thereof and the accompanying detailed description. A veneer may also be referred to as a laminate. In the following, reference will be made only to a veneer, which should not be construed as limiting. The term veneer also embraces a laminate. In some embodiments, the veneer 2 comprises a single layer of glass-ceramic having uniform composition. Optionally, non-ceramic coloring and/or glazing layers may be added at least on one side of the veneer.

Methods and a system for obtaining local geometry of a person's set of teeth can make use of, respectively, be on the basis of, a camera having a recording function. Additionally or alternatively, a form of impression-taking may be employed. Recording can also be done in a known manner with the aid of wax-casting. Such recording can be carried out by systems in a dental practice but also by dental practitioners such as a dentist or a dental surgeon. Conversion of the measurement data into computer-readable data is well-known in the art. For example, an impression may be made of the oral cavity including at least a part of a tooth surface for which a veneer is to be produced. The impression may be scanned directly using an optical scanner. Subsequently, the scanned impression, which is a negative model of the oral cavity, is converted into a positive virtual model by the computer. Alternatively, a positive physical model of the oral cavity is made based on the impression, and the physical model is scanned, such as by an optical or a touch probe scanner. Still alternatively, an optical impression of the oral cavity may be generated by an intra-oral scanner, wherein taking a physical impression can be avoided.

It is possible that obtaining the computer-readable data is carried out at a location which differs from the location where the data are further processed. All possible transmission links are useable. Use can be made of the internet but the data can also be provided by means of physical transport of a USB stick or a medium carrying computer-readable data, such as a CD ROM. It is of course also possible that a computer recording data for establishing the tooth geometry converts these data into computer-readable data and that, as such, computer-readable data are provided, without further transmission of these data to a remote location. It is also possible that the computer used for obtaining the computer-readable data and for further designing the individualized tooth veneer is one and the same computer.
Fig. 1 shows a set of teeth 1 which could be a model, but also an original set of teeth belonging to a person and present in that person's oral cavity. In a method according to the invention, from the outset, ideally, all the data representing the geometry of the complete set of teeth are provided (in the sense of "being made available") in computer-readable format. This will allow for designing an individualized tooth veneer such that it would match well with the complete set of teeth, rather than just fit to a pre-determined tooth which is to be covered by the individualized tooth veneer. However, it is possible that computer-readable tooth data are provided for representing the tooth geometry of only the tooth that needs to be covered by the individualized tooth veneer, i.e. the pre-determined tooth, possibly together with one or more neighbouring teeth.

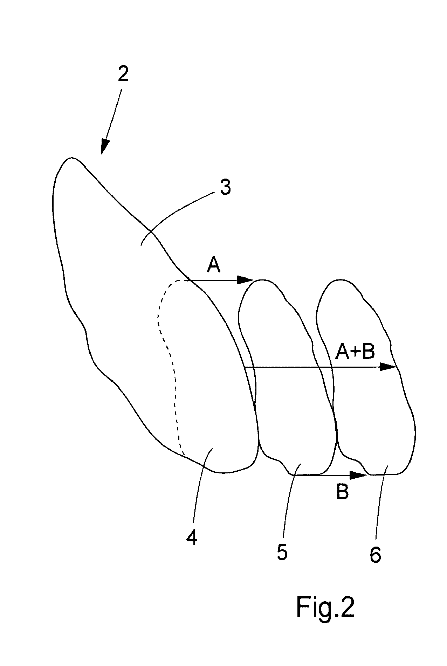

Fig. 2 shows a three dimensional representation 2 of the pre-determined tooth 3 for which a veneer 7 is designed. This representation is produced on the basis of the computer-readable tooth data. Standard tools within an imaging and design program, such as a CAD program, enable visualizing the three-dimensional representation 2 as seen from a different angle, after rotation, as zoomed in, as zoomed out, as fully transparent etc. Although ideally the complete pre-determined tooth 3 is shown, it is possible that only a part of the pre-determined tooth 3 is shown. The predetermined tooth 3 concerns a non-prepared tooth in the sense that the tooth is not prepared for covering by the veneer. Substantially no tooth material is removed. However, in embodiments of the invention, it is described that it is not necessary to remove material from the tooth 3. In other embodiments, small portions of a tooth 3 may be prepared, e.g. by grinding. This may be done e.g. to remove imperfections of a tooth surface. However, it is not intended that an entire surface, such as a front surface of a tooth 3, is prepared by grinding.

On the basis of the three-dimensional representation 2, computer-readable veneer data are provided for determining the geometry of the veneer 7. An example of how this can be done is schematically shown in Fig. 2. In the three dimensional representation 2, a selected tooth part 4 is defined. A tooth 3 having a surface corresponding to the selected tooth part 4 is to be covered by the veneer 7. On the basis of the selected tooth part 4, data for a back surface 5 of the veneer 7 is defined. On the basis of the selected tooth part 4, data for a front surface 6 of the veneer 7 is defined. It is possible that within the three dimensional imaging and design program, such designing concerns a fairly standard operation. Defining data for the back surface 5 may comprise copying the selected tooth part 4. Defining data for the front surface 6 may also comprise copying (directly or indirectly) the selected tooth part 4.

The selected tooth part 4 itself can for instance be defined by drawing with the cursor a line over the three dimensional representation 2 of the part of the pre-determined tooth 3 for which the veneer 7 is designed. Alternatively, the line may be generated by automatic edge detection. In a standard way, it can be confirmed to the computer that the line, closed in itself to define a border, defines indeed the selected tooth part 4. Defining data for the back surface 5 of the veneer can be based on a reproduction of the selected tooth part 4 visualized in the three dimensional representation 2, possibly with an offset (A) relative to the selected tooth part 4, such as to provide a space for bonding material. Likewise, defining data for the front surface 6 of the veneer can be based on a reproduction of the selected tooth part 4, or a reproduction of the data for the back surface 5 visualized in the three dimensional representation 2 with an offset (A + B, B) relative to the selected tooth part 4 and/or the data for the back surface 5. These are in itself standard operations. Offset B corresponds to the thickness of the veneer 7.

It will also be possible that the data for front surface 6 of the veneer 7 is defined by taking into account both the definition of the selected tooth part 4 and the definition of the data for back surface 5, while allowing according to a pre-determined program for a connection between edges of the back surface 5 and edges of the front surface 6, wherein the thickness of the veneer 7 is diminishing at the border thereof.

Providing the veneer data may also comprise defining a thickness of the veneer 7. This may be done indirectly by selecting different offsets (A, A + B, B) referred to above, but may also be done directly, by setting at least one offset and setting the thickness.

The veneer 7 may be designed, and produced, to have a thickness of at least about 0.08 mm and less than 0.02 mm, less than 0.14 mm or less than 0.1 mm.

The thickness of the veneer 7 is a mean thickness. At various portions the veneer 7 may be thinner or thicker. For example, the veneer 7 may comprise various structures to look more natural, such as grooves or furrows. Additionally or alternatively, the tooth veneer 7 may comprise a texture at the front surface 6 for a more natural look of the veneer 7 or to recreate a lost feature of a person's dentition, e.g. due to abrasion. It is also thinner at the border of the veneer 7. Hence, providing data for producing the veneer may comprise providing such structure or texture data. Texture or structure data may e.g. be provided automatically or designed using the user interface wherein pre-defined and/or user defined structures or textures are generated.

Furthermore, in embodiments of the invention, the veneer 7 or laminate is a non-framework dental product, i.e. the veneer 7 or laminate is placed directly on to a tooth surface without any intermediate framework to strengthen the laminate or veneer. Other dental prostheses, such as a dental crown or bridge may include a veneering layer on top of a framework, such as a coping or bridge framework, wherein the veneering layer is applied in several layers on top of the framework or coping and subsequently sintered. However, such a veneer on top of a framework does not suffer from strength issues and is not particularly fragile to handle.

The order of defining various components of computer-readable veneer data for determining the geometry of the veneer 7 is not necessarily pre-described. In other words, it is possible that first the thickness of the veneer 7 is defined, then a gap between the selected tooth part 4 and the veneer 7 for placement of bonding material, then a connection between edges of the back surface 5 and edges of the front surface 6, to finally define a back surface 5 of the veneer and a front surface 6 of the veneer 7. It may also be that in the three dimensional imaging and design program, one or more of thickness, gap, connection between edges of the back surface 5 and edges of the front surface 6 is pre-set. However, to allow for a large freedom in design, it will generally be preferred that each of these definitions can still be influenced by someone operating, i.e. putting input in the three dimensional imaging program, so as to arrive at a design for an individualized tooth veneer 7, optimized with respect to individual wishes and/or unique circumstances applicable to the part of the pre-determined tooth for which the veneer is designed.

Within the designing for production of a final shape of an individualized tooth veneer 7 there may thus be a standard design, and a customized design, allowing for a difference in efforts for designing. As the data are all computer-readable, it may also be possible to provide a person with a number of possible designs by transferring the data or images rapidly via standard means. That person can then indicate which design is approved of and should form the basis for production of the veneer.

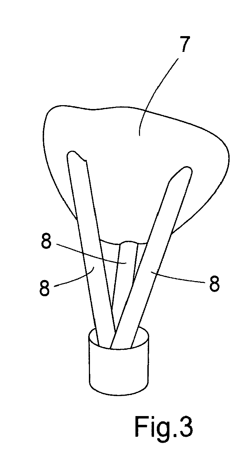

The designing of an individualized tooth veneer 7 may further comprise defining, on the basis of the veneer data, computer-readable sprue data. Fig. 3 shows a three dimensional representation of veneer 7 and three parts 8 which allow for forming sprues 8 usable for producing the veneer 7 by a casting or (injection) molding method. It will later be clear how these parts form an inlet channel for the material of which the veneer 7 is to be produced so that this material can enter a cavity in which the veneer 7 is formed. Fig. 3 may correspond to a three dimensional representation as can be produced using a three dimensional imaging and design program for providing the computer-readable veneer data for determining the geometry of the final three dimensional representation of the veneer 7. As will be clear later, the three dimensional representation of the veneer 7 and three parts 8 as shown in Fig. 3, may also be seen to represent a view of a three dimensional product, namely the view on a three dimensional product provided by CAM technology on the basis of the veneer data and the sprue data. It is also possible that Fig. 3 is seen to provide the view on a three dimensional product that corresponds to a cast and sintered product. The three dimensional representation of the veneer 7 may then be the final product of the designing process. The parts formed due to the sprues 8 can be removed by techniques known in the art, for instance milling, grinding or polishing. CAM technologies for producing a master of the veneer 7 based on the three dimensional representation of the veneer 7 may comprise rapid prototyping techniques, such as stereolithography, selective laser sintering, or inkjet printing. Alternatively, milling is employed as the CAM technology for providing the master. Such three-dimensional production methods are well known in the art, such as from Solidscape, USA, 3D System, USA, Objet, Israel, or Envisiontech, Germany.

Fig. 3 shows an example of a master with three parts 8 corresponding to sprues. It is however also possible that only one sprue 8 will be used for producing the veneer 7. The position of the sprue 8 can be very different from any of those shown in Fig. 3. For a person skilled in the art, it will be a matter of experience how the processing circumstances determine the optimal position of the sprue 8, striking a balance between optimal production and minimal interference with the final product when the sprue 8 is removed.

The designing of a final shape of an individualized tooth veneer 7 for a pre-determined tooth will be followed by producing the individualized tooth veneer 7, on the basis of the veneer data.

Producing the individualized tooth veneer 7 can be carried out by employing any method that can take as input the computer-readable veneer data. A particular advantageous production process employs providing a three dimensional shape of the individualized tooth veneer 7 to be produced, i.e. a master thereof, as well as the part for the required sprue 8, on the basis of the veneer data and the sprue data, such as by using any of the technologies referred to above. It concerns various techniques for fabricating a three dimensional prototype of an object, from a computer model of the object.

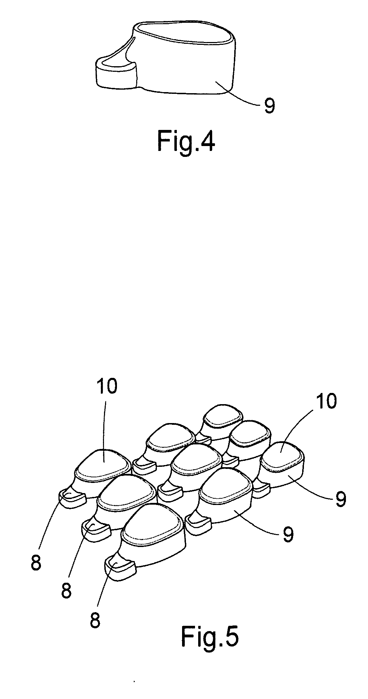

Fig. 4 shows a print support 9 onto which a shape of the individualized tooth veneer 7 to be produced and the at least one sprue can be printed. A number of different shapes of individualized tooth veneers 7 can be printed sequentially by moving the printer relative to a number of print supports 9 to end up with a number of print supports 9, each supporting the printed shape of the individualized tooth veneer 7 to be produced and at least one sprue 8, in wax-like or acrylic material and in three dimensions.

Fig. 5 shows a result of such a printing process. The shape of the individualized tooth veneer 10 and one part 8 corresponding to a sprue 8, connected thereto, rests on the top of each print support 9. Each print support may have a surface with a shape corresponding to the shape of a surface of the veneer 7, such as the back surface 5 thereof.

The veneer can also be produced using a milling technology as described in WO 2005/046502, which is incorporated herein in its entirety by reference for any purpose.

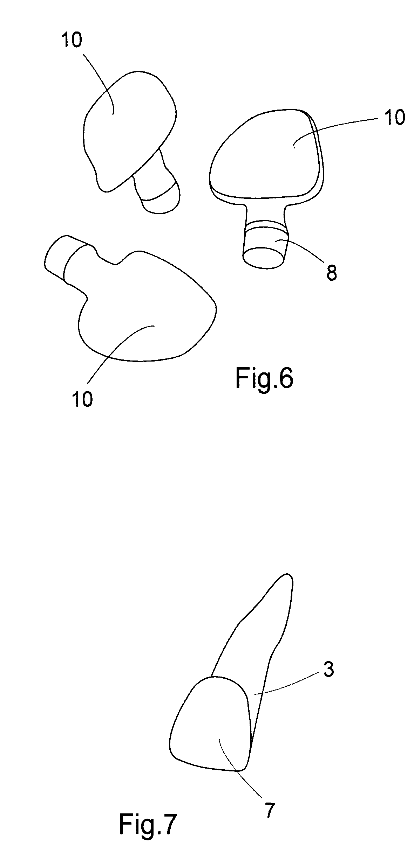

Fig. 6 shows the shape of the master 10 of the individualized tooth veneer 7 and the part 8 as removed from the print support 9.

Fig. 7 shows schematically how the shape of the individualized tooth veneer 7 would fit to the pre-determined tooth 3. For the sake of clarity, sprue 8 is not shown in Fig. 7.

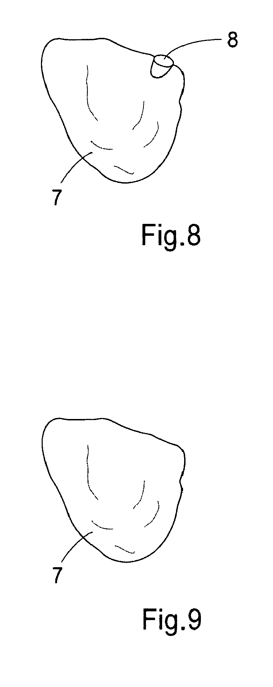

The individualized tooth veneer 7 may be produced using an investment casting technique. The master of the individualized tooth veneer 7, as optionally provided with one or more parts 8 corresponding to sprues, commonly also referred to as "the mold", can be placed in a so-called *cuvette*. The mold, as placed in a *cuvette* is surrounded by an investment material, such as gypsum. In this method the material of the mold is burned out from the *cuvette* so that a cavity is formed for forming the veneer 7, with the ceramic material of which the veneer 7 is to be made. The ceramic material is supplied to this cavity through the sprues 8 and pressed into the space under vacuum and at high temperature. These steps are all well known in the art and the process or sintering parameters, such as pressure, temperature and time depend on the material used. Once a veneer 7 has been formed in the desired shape, demolding takes place, for instance by blasting the investment material. Fig. 8 shows an example of the veneer 7. The part resulting from the sprue can be removed by standard methods, such as polishing or milling. The final result, namely the individualized tooth veneer of ceramic material 11, is shown in Fig. 9. The veneer 7 is thus provided in its final shape.

As follows from above, a strict separation in terms of physical locations at which designing the individualized tooth veneer 7 and production of the individualized tooth veneer 7 take place, is not always needed. Hence, it is equally possible that a method of producing a final shape of an individualized tooth veneer 7 for a predetermined tooth 3, comprises the method of designing for production of a final shape of the individualized tooth veneer 7, as elaborated upon above.

It is possible that more than one individualized tooth veneer 7 is produced. Each individualized tooth veneer 7 may be tailor-made for a predetermined tooth of a person so that a tailor-made veneer is available for each predetermined tooth of that person.

Ideally, if an individualized veneer 7 for more than one tooth 3 of a set of teeth 1 needs to be produced and applied, these veneers 7 are preferably produced and applied together, as a plurality of individualized veneers 7, so that materials, and optionally colors, and way of applying to the respective teeth, are the same. To facilitate this, for that purpose, the designing may comprise providing on the basis of the three-dimensional representation, computer-readable veneer data for determining the geometry of a master of the plurality of individualized veneers 7 and sprues 8, so that the plurality of individualized veneers can be produced by a single casting or molding cavity that has the geometry of the master.

To ensure that each of the individualized tooth veneers 7 for predetermined teeth of a person can be safely stored as soon as it has been produced, and safely transported to a local dental practice where it will ultimately be placed onto the teeth of the relevant person, also a holder 12 is produced for holding each of the individualized tooth veneers 7. The holder 12 can also be individualized and be produced on the basis of the computer-readable tooth data. The individualized tooth holder 12 will then be very suitable for holding the individualized tooth veneer in the period beginning after the production of the tooth veneer 7 and ending on placement of the individualized tooth veneer 7 onto the predetermined tooth 3.

The production of the individualized holder 12 comprises preferably the production of a first part 13 which is provided with a shape for fittingly matching a back surface of the individualized tooth veneer 7. The first part 13 may have a shape that is complementary to a shape of the back surface of the individualized tooth veneer 7. The difference may be only the space provided for the bonding material. Hence, the first part 13 may contact substantially the entire back surface 5 of the tooth veneer 7.

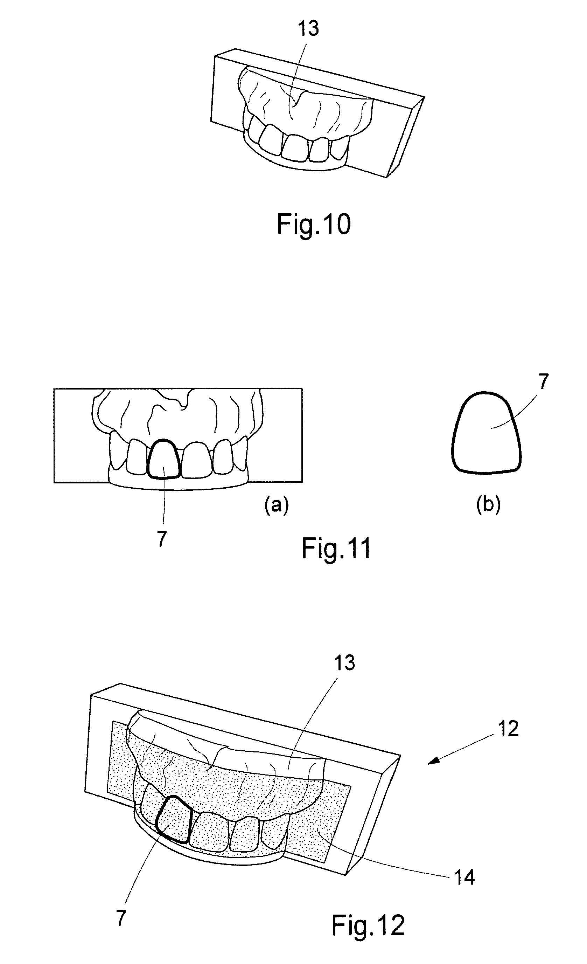

In a very advantageous example, shown in Fig. 10, such a first part 13 is provided as comprising a model of a at least a tooth part 12 of a predetermined tooth for which the veneer 7 has been designed and produced.

Producing such a model is for instance described in WO2008/051130, which is incorporated herein by reference in its entirety for any purpose.

Fig. 11a shows a frontal view of such a model. Fig. 11b shows a frontal part of an individualized tooth veneer 7 that is intended to cover one of the teeth shown in the model 13. The individualized tooth veneer 7 covers in this embodiment one of the front teeth. In Fig. 11a, the position of the individualized tooth veneer 7 is indicated by the same reference and is drawn in thick lines.

It will be clear that the model of the tooth for which the individualized veneer 7 has been designed and produced will most suitably provide the first part 13with a shape for fittingly matching a back surface of the individualized tooth veneer 7. However, it is also possible that the first part 13 is provided with a shape for fittingly matching one side of the tooth veneer 7 in a way different from providing a tooth part for which the veneer 7 has been designed and produced. The first part 13 may be produced by CAM technology, such as by rapid prototyping as described above or by milling.

Holder 12 preferably provides a second part 14 so that the individualized tooth veneer 7 can be sandwiched between the first part 13 and the second part 14. Preferably, the second part 14 is suitable for releasably bonding a front surface of the individualized tooth veneer 7 against the second part 14. The second part 14 may be provided as a foil. The second part 14 may be provided with a shape for fittingly matching a front surface of the individualized tooth veneer 7. Additionally, the second part may have a shape fittingly matching any of the teeth neighboring the tooth for which the veneer 7 is produced. This facilitates using the second part 14 as a tool to apply the veneer 7 to the tooth for which it is produced.

It is preferable that the first part 13 and second part 14 are provided such that these are releasably securable to each other when the individualized tooth veneer 7 is sandwiched between the first part 13 and the second part 14.

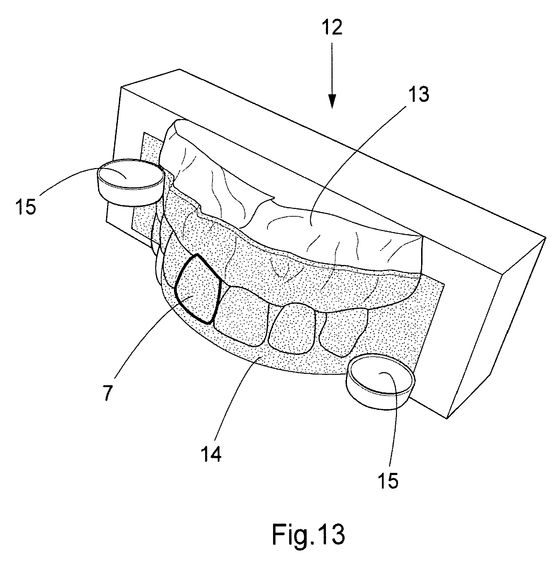

In the example wherein the second part 14 is provided as a foil, the second part 14 may be provided with the appropriate shape by providing the foil as made of a plastic. This plastic may be heated. Then the individualized tooth veneer 7 may be sandwiched between the first part 13 and the second part 14, followed by vacuum pressing the foil onto the first part 13. To allow for releasably securing the first part 13 and the second part 14 to each other, an adhesive may be provided to the second part 14. This adhesive may also be suitable for releasably bonding the front surface of the individualized tooth veneer 7 against the second part 14. However, the second part 14 may also be made suitable for releasably bonding the front surface of the individualized tooth veneer and/or releasably securing to the first part 13, by means of electrostatically bonding of a foil to the veneer 7 and/or the first part 13. Such a method is well known in the art, and is often used for providing a foil to a display on, for instance, a new mobile telephone. Second part 14 may be a transparent part, as shown in Fig. 12, 13 and 16. The releasable bonding may be provided by, e.g., vacuum bonding, electrostatic bonding, and/or an adhesive bonding film. Vacuum bonding can be provided by a thermo-forming unit, wherein a deformable blank is pre-heated, positioned on top of the first part with the veneer 7 in-between and then deformed by activating a vacuum pump, whereby the blank releasably bonds to the veneer 7, which is supported by the first part 13. Then, the deformed blank can be trimmed to a desired shape. Such vacuum forming apparatus is available from, e.g., Dreve, Germany, under the tradenames Vacformat U, Vacformat 2000 and Druformat Scan. Bonding films, such as electrostatic foils or films, films with adhesives, both resin based and light curing based, etc. are available, from, e.g., 3M, USA.

Producing the holder 12 preferably comprises providing the second part 14 with grasp holders 15 for manually holding the second part 14 during placement of the individualized tooth veneer 7 against the predetermined tooth. Such grasp holders 15 may be glued onto the second part 14 or may be provided by means of a mechanical attachment which is possible where the second part has a thickness which allows for instance for screwing on a little screw that forms part of the grasp holder 15.

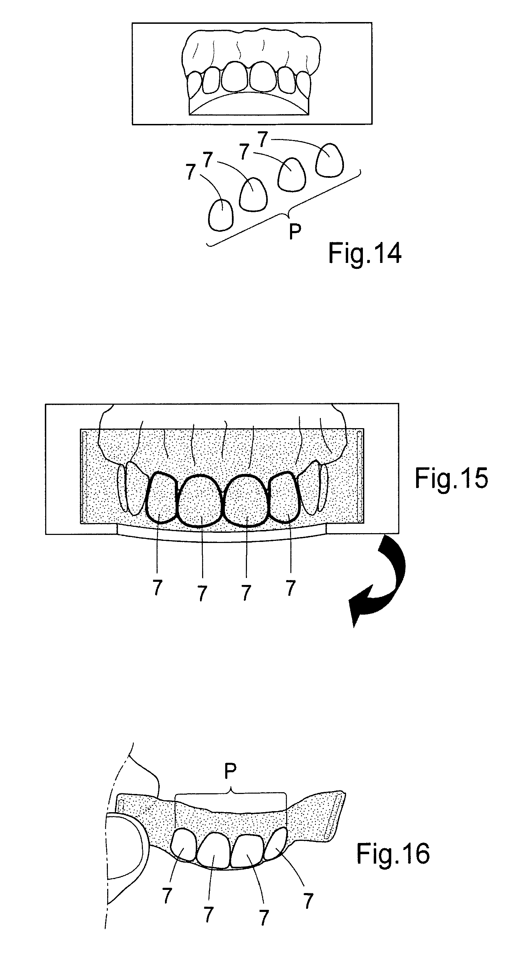

It is possible that a plurality of individualized tooth veneers 7 are produced for a predetermined set of teeth. A plurality P of individualized tooth veneers 7 is shown in Fig. 14. The second part 14 is then preferably produced such that the front surface of each of the plurality P of individualized tooth veneers 7 can be releasably bonded against the second part 14 in a fixed positional relationship which corresponds to a positional relationship of the teeth in the predetermined set of teeth 1 for which the veneers 7 are produced. Fig. 16 shows such a fixed positional relationship between individualized tooth veneers 7 as releasably bonded against the second part 14.

A method of improving the aesthetics of a number of predetermined teeth may first comprise the production of the individualized tooth veneers 7 in ways explained above, followed by placing each of these veneers 7 from the first part 13 onto the predetermined tooth. Such a method may comprise using the second part 14 as a tool for placing the veneers 7 onto the predetermined teeth. Taking the individualized veneers 7 from the first part 13 can simply be done by lifting the second part 14 from the first part 13 and, if needed, undo the securing of the second part 14 against the first part 13. A result of lifting the second part 14, is shown in Fig. 16. The plurality of individualized tooth veneers is held in the predetermined fixed positional relationship by holding, in this case in the hand, the second part 14.

Although not shown, it is possible that the method of producing the individualized tooth veneer and the individualized holder comprises applying a bonding material to the individualized tooth veneer 7. This can be followed by sandwiching the individualized tooth veneer 7 between the first part 13 and the second part 14. Where the individualized tooth veneers 7 are made to be translucent, a coloring agent may be added to the bonding material. After placement of the individualized tooth veneer 7 against the predetermined tooth, the bonding material may be light-hardened in a way well known in the art, for fixing the individualized tooth veneer 7 against the predetermined tooth.

In some embodiments, the tooth veneer 7 is pre-treated with a bonding material before application to a tooth and possibly even before delivery to the dental practitioner who will apply the tooth veneer 7 to the relevant tooth. Using conventional veneers, the bonding material is typically applied to the tooth onto which the veneer is to be applied, the veneer is then placed on that tooth, and the bonding material cured, such as by light curing. According to embodiments of the invention, the bonding material is at least partly applied to the tooth veneer 7, such as 25-75% of the total bonding material to be used for bonding the tooth veneer 7. The pre-treatment can be carried out at the production facility of the tooth veneer 7 or by a dental technician. The pre-treatment of at least one side of the tooth veneer 7, such as the backside facing the tooth, may comprise at least one of the following steps: cleaning of the tooth veneer; application of etching gel for preparing a chemical and/or mechanical connection surface; providing etched surface prepared for sealing with silane as transport protection; applying a silanization process for obtaining a silanized surface; application of at least one layer of bonding material on top of the silanized surface; application of coloring material, such as for cervical and/or incisal colorings, before, on top of, or mixed in the bonding material; applying the bonding material to the tooth veneer 7; and light curing the bonding material for delivery to the dental practitioner.

Embodiments may also comprise pre-treatment by the practitioner of the tooth to receive the tooth veneer. The pre-treatment by the practitioner may comprise at least one of the following steps: cleaning the non-prepared (i.e. substantially non-ground front surface) surface of the tooth, such as with isopropanol; etching of the tooth surface, such as with etching gel, e.g. fluoride etching gel, fluoride hydrogen etching gel etc.; silanization of the etched tooth surface; and application of the remainder of the binding material, such as 25%-75 if 25-75% was applied to the tooth veneer 7 and to end up at total of 100%, onto the tooth surface. The bonding material applied to the tooth surface may have a neutral color, such as transparent or white, whereby appearance provided by the coloring added to the veneer is substantially not affected.

Embodiments of the invention may also comprise at least one of the following steps for a veneering procedure: providing pre-treated veneer 7 with hardened bonding material; applying the tooth veneer onto the tooth surface comprising bonding material; adjusting the veneer 7; and curing, such as by light curing, the connection between the surfaces with bonding material.

Using embodiments of the pre-treating procedure, the veneer 7 may comprise a pre-treated bonding material. The pre-treated bonding material may comprise an at least partially cured bonding material, such as a light curable dental bonding agent. The pre-treated bonding material may comprise at least one coloring material to color the veneer 7. Hence, due to the thinness of the veneer 7 in combination with its translucency the coloring of the bonding material will be visible. Therefore, application of a separate coloring layer is not necessary.

The bonding material may be applied by a CAM procedure, such as by ink-jet technology. Then, the CAD user interface can provide means to design different layers of the bonding material and/or different areas of the tooth veneer having different shades of the bonding material. For example, a suggestion may be automatically generated based on the type of tooth, such as front or incisor, onto which the veneer 7 is to be applied. Alternatively, the user indicates, such as by indicating with the cursor, areas defined by lines defining a closed curve. Within the border of the lines a particular color of the bonding material is defined and subsequently applied. Furthermore, a pattern having different areas corresponding to the tooth anatomy may be projected onto the three dimensional representation of the individual tooth veneer. Then, the user can select a particular color for a particular area. Application of the bonding material may be provided using the technology as described in WO2006/036114, which is incorporated herein by reference in its entirety for any purpose, for applying a metal and/or ceramic powder, but does not disclose application of a bonding material. The bonding material may also be applied manually as described above.

Various bonding materials, having different shades or colors are commercially available, such as Panavia F and Panavia 21 from Kuray Dental, USA, Variolink or Syntac Heliobond from Iviclar Vivadent, Liechtenstein, RelyX ARC from 3M, USA, and/or NX3 Nexus from Dentalcompare, USA.

Routine procedures may alternatively be carried out by the dental practitioner before applying the individualized tooth veneer 7 to the predetermined tooth. The surface of the tooth that is to be covered by the veneer 7 may be etched in order to provide a clean surface. The etching may be followed by applying a silanization layer as part of a routine and standard procedure carried out by a dental practitioner. The silanization layer provides a sealing to the etched surface.

The ceramic material may be a glass ceramic material ,such as a Li-disilicate glass ceramic. Li-disilicate glass ceramic has a high strength, which provides for improved possibilities to handle the fragile product. Such glass-ceramic is e.g. available under the tradename IPS e.max from Ivoclar Vivadent, Lichtenstein. Alternatively, the ceramic material may comprise a microwave sintered aluminium oxide ceramic.

In some embodiments, the veneer 7 comprises a single layer of glass-ceramic having uniform composition. Optionally, non-ceramic coloring and/or glazing layers may be added at least on one side of the veneer 7.

The invention is not limited to the embodiments discussed above. Many modifications and different embodiments are possible. Each of these are understood to fall within the framework of the invention, as defined by the appended claims.

## Claims

1. Method of producing at least one individualized tooth veneer (7); and a holder (12) for holding the at least one individualized tooth veneer (7), wherein each of the at least one individualized tooth veneer (7) is tailor-made for a predetermined tooth of a person, wherein the method comprises:
• providing computer-readable tooth data which represents a tooth geometry of at least a part of the predetermined tooth;
• providing, on the basis of the computer-readable tooth data, computer-readable veneer data which represent the geometry of the individualized tooth veneer (7);
• producing, on the basis of the computer-readable veneer data, the individualized tooth veneer (7); and
producing, on the basis of the computer-readable tooth data, an individualized holder (12) for holding the individualized tooth veneer (7).

2. Method according to claim 1, wherein the individualized tooth veneer (7) is produced in its final shape.

3. Method according to claim 1 or 2, wherein the method comprises:
• producing a first part (13) of the individualized holder (12), wherein the first part (13) is provided with a shape for fittingly matching a back surface of the individualized tooth veneer (7).

4. Method according to claim 3, wherein the method further comprises:
• producing a second part (14) of the individualized holder (12) for sandwiching the individualized tooth veneer (7) between the first part (13) and the second part (14) and releasably bonding a front surface of the individualized tooth veneer (7) against the second part (14), wherein the second part (14) optionally is a transparent part and/or provided with grasp holders (15) for manually holding the second part (14) during placement of the individualized tooth veneer (7) against the predetermined tooth.

5. Method according to claim 3 and 4, wherein the method comprises:
• providing the first and second part (13, 14) such that these are releasably securable to each other when the individualized tooth veneer (7) is sandwiched between the first and second part (13, 14).

6. Method according to any one of claim 3-4, wherein the method comprises:
• producing the first part (13) such that it exhibits a model of at least a part of the predetermined tooth, wherein the part has a shape that is complementary to a shape of the back surface of the individualized tooth veneer (7).

7. Method according to any one of claims 4-6, wherein the method comprises:
• providing the second part (14) with a shape for fittingly matching a front surface of the individualized tooth veneer (7).

8. Method according to claim 7, wherein the method comprises:
• providing the second part as a foil.

9. Method according to any one of claims 7 and 8 wherein the method comprises
• providing the foil as made of a plastic;
• heating the plastic;
• sandwiching the individualized tooth veneer (7) between the first part (13) and the foil; and
• vacuum pressing the foil onto the first part (13).

10. Method according to any one of claims 4-9, wherein the method comprises:
• providing an adhesive to the second part (14) for releasably bonding the front surface of the individualized tooth veneer (7) against the second part (14).

11. Method according to any one of claims 4-10, wherein the method comprises:
• producing a plurality of individualized tooth veneers (7) for a predetermined set of teeth (1);
• producing the second part (14) such that the front surface of each of the plurality of individualized tooth veneers (7) can be releasably bonded against the second part (14) in a fixed positional relationship which corresponds to a positional relationship of the teeth in the predetermined set of teeth (1) for which the veneers (7) are produced.

12. Method according to any one of claims 4-11, wherein the method comprises:
• applying a bonding material, such as a colored bonding material, to the individualized tooth veneer (7); and
• sandwiching the individualized tooth veneer (7) between the first part (13) and the second part (14).

13. Method according to any one of the previous claims, wherein each of the at least one tooth veneers (7) is made of a ceramic, such as a glass ceramic, for example a Li-disilicate glass ceramic, or a microwave sintered aluminium oxide ceramic.

14. Method according to any one of the previous claims, wherein each of the at least one tooth veneers (7) has a thickness of at least about 0,08 mm and less than 0.2 mm, less than 0.14 mm or less than 0.1 mm.

15. Method of improving the aesthetics of the at least one predetermined tooth, wherein the method comprises producing at least one individualized tooth veneer (7) in accordance with any one of claims 4-14, wherein the method further comprises placing the veneer (7) from the first part (13) onto the predetermined tooth, and optionally using the second part (14) as a tool for placing the veneer (7) onto the predetermined tooth.
